# EUROPÄISCHE PATENTANMELDUNG

(11) **EP 1 118 775 A2**
(43) Veröffentlichungstag der Anmeldung: **25.07.2001**
(21) Anmeldenummer: 00123599.3
(22) Anmeldetag: 28.10.2000
(51) Int. Cl.: F15B 15/22

(54) **Pneumatikzylinder mit innenliegenden Flüssigkeitsdämpfungsmitteln und Verfahren zum Dämpfen eines Pneumatikzylinders**

(30) Priorität: 19.01.2000 US 176774 P; 30.08.2000 US 650921
(71) Anmelder: ACE Controls, Inc., Farmington Hills, Michigan 48335 (US)
(72) Erfinder: Chamulak, Steven, Canton, Michigan 48188 (US); Ferkany, Michael A., White Lake, Michigan 48386 (US)
(74) Vertreter: Beyer, Rudi

(57) **Zusammenfassung**

Die Erfindung betrifft einen Pneumatikzylinder und ein Verfahren zum Dämpfen eines Pneumatikzylinders für industrielle Zwecke mit innenliegenden Flüssigkeitsdämpfungsmitteln zwecks Dämpfung am Ende des Zylinderhubes.

## Beschreibung

Die Erfindung betrifft einen Pneumatikzylinder für industrielle Zwecke mit innenliegenden Flüssigkeitsdämpfungsmitteln zwecks Dämpfung am Ende des (Zylinder-)Hubes.

Des weiteren betrifft die Erfindung ein Verfahren zum Dämpfen eines Pneumatikzylinders.

Industrielle Pneumatikzylinder besitzen allgemein Mittel zur Dämpfung des Zylinders am Ende des Kolbenhubes. Herkömmliche Pneumatikzylinder weisen eine innenliegende Pneumatikvorrichtung auf, um eine Stoßdämpfung am Ende des Kolbenhubes zu bewirken, jedoch arbeiten derartige Vorrichtungen nur in einer kontrollierten Atmosphäre, das heißt bei kontrollierter Temperatur und Luftfeuchtigkeit, zufriedenstellend. In bestimmten Industrien, wie zum Beispiel auf dem Gebiet der Medizin und in einigen Bereichen der Druckereiindustrie, wird die Luft aus anderen Gründen kontrolliert. Diese Art von Zylinderdämpfungsvorrichtungen scheint in einer solchen Umgebung ausreichend. In einer normalen Industrieatmosphäre arbeiten jedoch Pneumatikzylinder mit Luft zum Dämpfen der Stoßwirkung am Ende des Hubes im allgemeinen nicht zufriedenstellend. Demgemäß wird in der Praxis ein außenliegender hydraulischer Stoßdämpfer eingesetzt, um den Stoß am Ende des Hubes zu dämpfen. Eine solche Anordnung ist sperrig und nicht immer zuverlässig.

Der allgemeine Zweck der vorliegenden Erfindung ist die Schaffung eines Pneumatikzylinders mit einem innenliegenden hydraulischen Stoßdämpfer, durch den die Stoßdämpfung am Hubende erfolgt. Außerdem liegt der Erfindung die Aufgabe zugrunde, ein Verfahren zum Dämpfen eines Pneumatikzylinders zu schaffen.

In der Regel umfaßt ein Pneumatikzylinder einen inneren Kolben, der auf einer Stange in einem die Druckkammer bildenden Zylinder montiert ist. Bei der Hin- und Herbewegung der Kolbenstange bewegt sich der Kolben entweder in Richtung auf den Kopf oder einen Deckel, wobei die Bewegung durch Regelung entweder des Lufteintritts oder des Luftaustritts gesteuert wird. Bei einigen Einsatzzwecken ist es wichtig, entweder an einem oder an beiden Hubenden eine Verzögerungs- oder Dämpfungsvorrichtung vorzusehen.

Bei einer bevorzugten Ausführungsform der Erfindung weist ein Pneumatikkolben ein Paar offener Zylinder auf, wobei einer dem Zylinderkopf und der andere dem Zylinderdeckel zugekehrt ist. Zwei schwimmende oder frei bewegliche Dämpfungskolben sind auf entgegengesetzten Seiten des Pneumatikkolbens auf der Kolbenstange angeordnet und gleiten in die offenen Zylinder zur Ausbildung eines Paares hydraulischer (der Dämpfung dienenden) Hydraulikkammern. Nähert sich der Pneumatikkolben seinem Hubende, so bewirkt der Dämpfungskolben zwischen dem Ende der pneumatischen Kammer und dem Pneumatikkolben, daß das in einer der Dämpfungskammern befindliche Öl durch einen Dosier- oder Drosselkanal in Richtung der Dämpfungskammer auf dem gegenüberliegenden Ende des Pneumatikkolbens strömt. Die Größe des Dosier- oder Drosselkanals kontrolliert das letzte Abbremsen des Pneumatikkolbens.

Bewegt sich der Kolben in der entgegengesetzten Richtung, so arbeitet der andere Dämpfungskolben auf ähnliche Weise. Somit wird das Ende von jedem Hub des Pneumatikkolbens durch einen innenliegenden hydraulischen Stoßdämpfer kontrolliert. Mehrere Ausführungen sind offenbart, um das zwischen den Dämpfungskammern strömende Öl zu dosieren.

Noch weitere Zielsetzungen und Vorteile der Erfindung sind für den Fachmann mit Bezug auf die folgende detaillierte Beschreibung ersichtlich.

### Beschreibung der Zeichnungen

Die Beschreibung bezieht sich auf die beigefügten Zeichnungen, wobei gleiche Teile in den verschiedenen Ansichten mit gleichen Bezugsziffern bezeichnet sind und in denen die Erfindung anhand mehrerer Ausführungsformen beispielsweise veranschaulicht ist. Es zeigen:
- Fig. 1: eine perspektivisch gezeichnete Ansicht, teils im Schnitt, eines Pneumatikzylinders zur Veranschaulichung einer bevorzugten Ausführungsform der Erfindung;
- Fig. 2: einen Schnitt durch den Zylinder, in der ein Dämpfungskolben bei Beginn der Dämpfungsphase des Hubes dargestellt ist;
- Fig. 3: den Pneumatikkolben, während der Beendigung des Hubes in Richtung auf den Deckel;
- Fig. 4: die Position des Pneumatikkolbens am Ende seines Hubes in Richtung auf den Zylinderkopf, wobei die Hydraulikflüssigkeit von der einen Dämpfungskammer in die andere Dämpfungskammer abströmt;
- Fig. 5: eine weitere Ausführungsform der Erfindung mit einem verstellbaren oder einstellbaren Dosierkanal, bei der eine drehbare Kolbenhälfte und eine stationäre Kolbenhälfte zum Einsatz kommen;
- Fig. 6: eine Ansicht, teils im Schnitt, zur Veranschaulichung der Art und Weise, in der die Größe des Dosierkanals verstellt wird, und
- Fig. 7: eine Perspektivansicht einer weiteren Methode der Dosierung der Dämpfungsflüssigkeit mittels Mehrfachöffnungen (Kanälen).

### Beschreibung der bevorzugten Ausführungsform

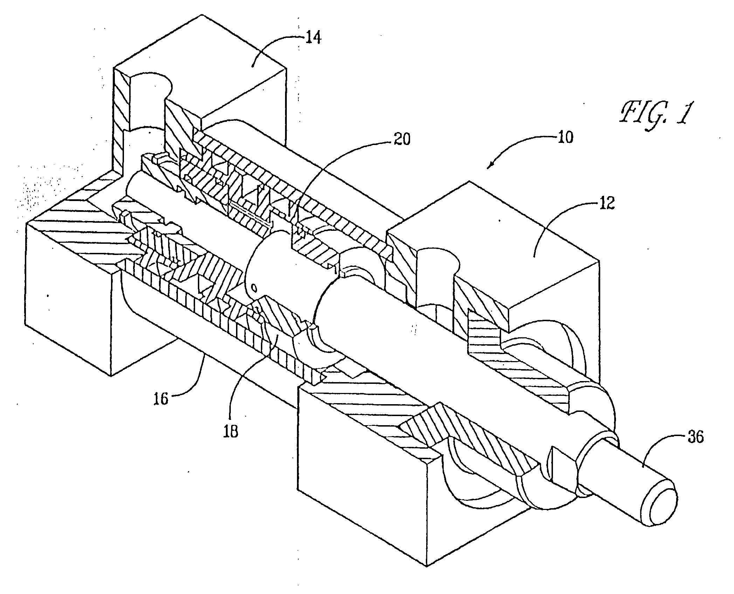

Fig. 1 ist eine Schnittdarstellung, in der ein bevorzugter Pneumatikzylinder 10 mit einer erfindungsgemäßen inneren hydraulischen Dämpfungsvorrichtung dargestellt ist. Der Zylinder umfaßt den Kopf 12, den Deckel 14 und einen Zylinder 16, der in einer für den Fachmann allgemein bekannten Weise zwischen Kopf 12 und Deckel 14 angeordnet ist.

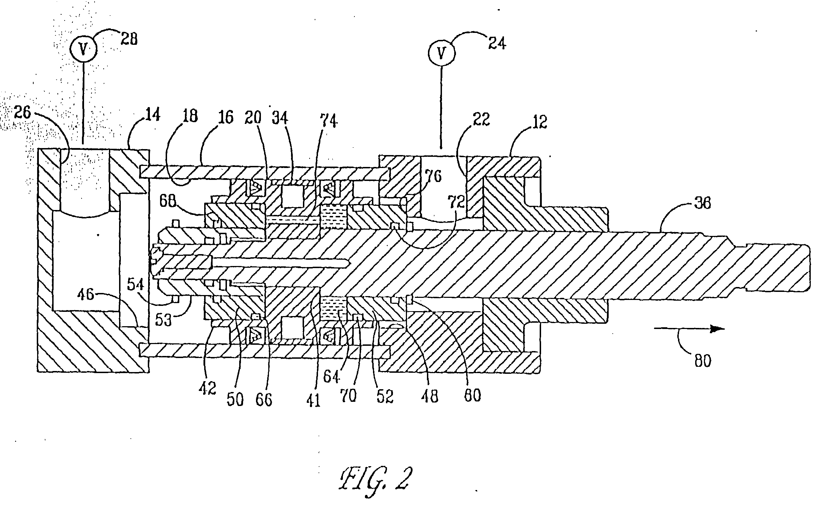

Wie aus den Fig. 2 bis 4 ersichtlich ist, besitzt der Zylinder 16 eine innenliegende Luftkammer 18. Ein Pneumatikkolben 20 ist verschiebbar in der Kammer 18 zwischen dem Kopf 12 und dem Deckel 14 montiert. Der Kopf 12 weist einen inneren Kanal 22 mit geeigneten Ventilmitteln 24 auf, damit Luft in die Kammer 18 und aus dieser ausströmen kann. In gleicher Weise ist der Deckel 14 mit Kanalmitteln 26 mit geeigneten Ventilmitteln 28 versehen, um bei der Hin- und Herbewegung des Kolbens 20 den Luftdurchgang in die und aus der Luftkammer zu steuern.

Der Pneumatikkolben 20 ist mit herkömmlichen ringförmigen Kolbendichtungen 30 und 32 und einem Verschleißring 34 versehen, der gleitend an dem Zylinder 16 anliegt. Der Kolben 20 ist auf einer Kolbenstange 36 angeordnet, die zusammen mit dem Kolben 20 entlang einer Achse 40 bewegt werden kann. Der Kolben 20 liegt mit einer Schulter 41 an der Kolbenstange an. Die Kolbenstange 36 ist in der Regel zur Verbindung mit einer (nicht dargestellten) Last vorgesehen, um die Funktion eines herkömmlichen Luftzylinders zu erfüllen.

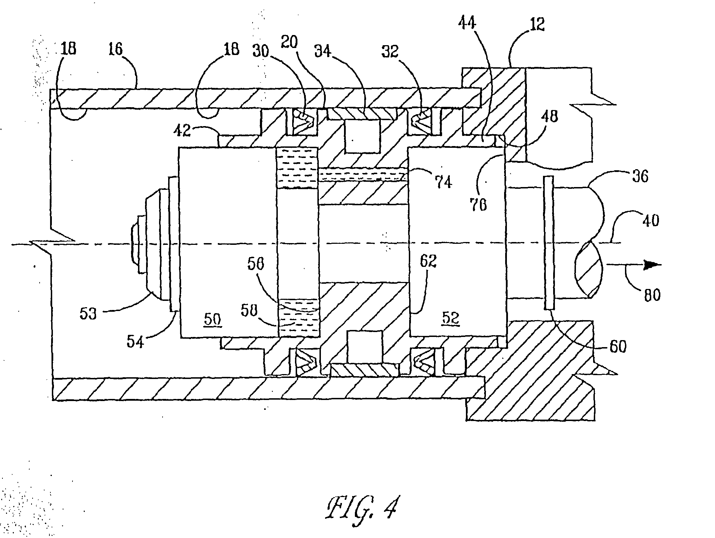

Der Pneumatikkolben 20 weist ein Paar zylindrische Axialverlängerungen 42 und 44 (Fig. 4) auf, die durch Verschieben in Richtung von einem Paar Ausnehmungen 46 und 48 in dem Deckel 14 und in dem Kopf 12 gleichermaßen aufgenommen werden können. Hydraulische Dämpfungskolben 50 und 52 werden durch Verschieben in die Verlängerungen 42 bzw. 44 aufgenommen, wenn der Pneumatikkolben 20 hin- und herbewegt wird.

Eine längliche Gegenmutter 53 bildet eine Verlängerung der Kolbenstange und ist auf das Ende der Kolbenstange aufgeschraubt, um den Pneumatikkolben 20 zwischen der Schulter 41 und der Gegenmutter 53 zu klemmen.

Der hintere Dämpfungskolben 50 ist axial zwischen der Gegenmutter 53 und einem Haltering 54 verschiebbar, und zwischen einer inneren Wand 56 des Pneumatikkolbens 20. In der in Fig. 4 dargestellten Position, in welcher der Dämpfungskolben 50 von der Kolbenwandung 56 abgesetzt bzw. getrennt ist, wird eine hydraulische Dämpfungskammer 58 gebildet, die je nach Bewegungsrichtung des Dämpfungskolbens relativ zur Wandung 56 entweder vergrößert oder verkleinert wird.

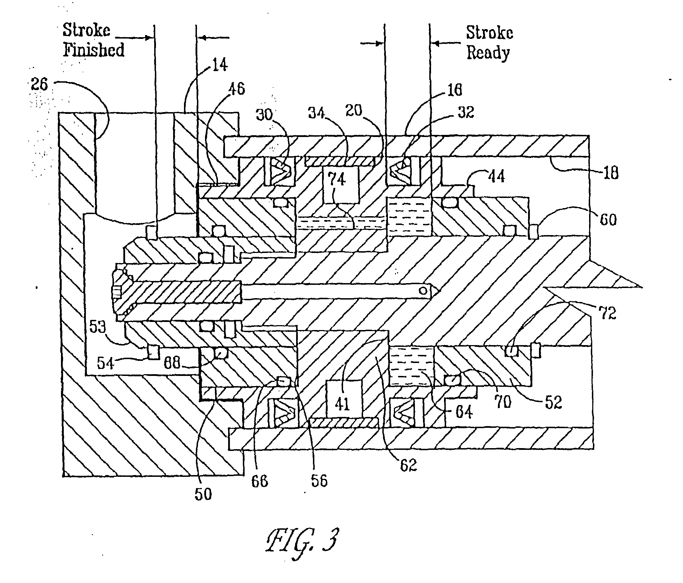

Auf ähnliche Weise ist der vordere Dämpfungskolben 52 verschiebbar auf der Kolbenstange 36 angeordnet, wobei seine axiale Bewegung durch einen Haltering 60 und die Innenwand 62 des Pneumatikkolbens 20 begrenzt wird. Ist der Dämpfungskolben 52 von der Wand 62 abgesetzt, so bildet er eine hydraulische Dämpfungskammer 64, wie dies am besten aus Fig. 3 zu ersehen ist.

Dichtungsringe 66 und 68 bilden flüssigkeitsundurchlässige Abdichtungen zwischen dem Dämpfungskolben 50, zylindrischer Verlängerung 42 und Gegenmutter 53. Auf ähnliche Weise dient ein Paar Dichtungsringe 70 und 72 als flüssigkeitsundurchlässige Abdichtungen zwischen Dämpfungskolben 52, zylindrischer Verlängerung 44 und der Kolbenstange 36.

Im Betrieb wird der Pneumatikkolben 20 durch von einer nicht dargestellten Quelle aus zugeführter Druckluft abwechselnd in Richtung Zylinderdeckel 14 und dann in der anderen Richtung zum Zylinderkopf 12 hin bewegt. Die Kolbenstange 36 bewegt sich zusammen mit dem Pneumatikkolben 20 zur Bewegung einer nicht dargestellten Last.

Ein hydraulischer Dosierkanal 74 verbindet die hydraulische Dämpfungskammer 58 und die hydraulische Dämpfungskammer 64. Die Größe des Dosierkanals 74 wird so gewählt, daß die Flüssigkeitsströmung zwischen den beiden hydraulischen Dämpfungskammern gesteuert wird, wobei die Reibung beim Durchströmen des hydraulischen Öls die Energie der Last absorbiert, wenn das Hubende des Pneumatikkolbens erreicht wird.

Fig. 2 zeigt die Dämpfungskolben in ihren Positionen, kurz bevor der vordere Dämpfungskolben 52 durch einen Kontakt mit der Ausnehmung 48 in den Zylinderkopf 12 hineinbewegt wird. Die Kolbenstange 36 hat sich schnell ohne jede Einschränkung des vorderen Dämpfungskolbens 52 bis zu der aus Fig. 2 ersichtlichen Stellung vorwärtsbewegt. An diesem Punkt gelangt der vordere Dämpfungskolben 52 in Kontakt mit der Innenseite der vorderen Kappe (Kopf) des Zylinders bei 76. Bewegen sich die Kolbenstange 36 und der pneumatische Kolben 20 nach rechts, zwingt der Dämpfungskolben 52 die Hydraulikflüssigkeit aus der Dämpfungskammer 64 auf der rechten Seite, und zwar durch die Öffnung (Drosselöffnung) 74' in die Kammer 58 auf der linken Seite. Dieses bewirkt, daß der hintere Dämpfungskolben 50 sich nach links auf der Kolbenstange bewegt, und zwar bis der Kolben 50 an dem Haltering 54 anliegt.

Fig. 4 zeigt das endgültige Ergebnis mit dem vorderen Dämpfungskolben 52 am Ende seines Hubes und völlig kollabierter Dämpfungskammer 64. Der hintere Kolben 50 ist bei Beginn seines Hubes, während die Dämpfungskammer 58 vollständig gefüllt ist. Auf diese Art und Weise ist der hintere Kolben "fertig", wenn der vordere Dämpfungskolben am Ende seines Hubes ist und umgekehrt.

Wenn sich die Kolbenstange 36 nach links bewegt, bewegen sich die Kolbenstange, die zwei Dämpfungskolben 50, 52 und der pneumatische Kolben 20 nach links, bis der Dämpfungskolben 50 in eine Ausnehmung 46 eintritt und an dem Deckel 14 anliegt. Die Kolbenstange 36 setzt ihre Bewegung in Richtung des Deckels 14 fort, während der Dämpfungskolben 50 die Hydraulikflüssigkeit von der Kammer 58 durch die Drosselöffnung in die Kammer 64 hineinpreßt. Diese hydraulische Drosselung veranlaßt den Pneumatikkolben 20 sich allmählich auf der Kolbenstange 36 nach rechts zu bewegen, bis der Dämpfungskolben 52 an dem Haltering 60 anliegt.

Fig. 5 zeigt einen verstellbaren Pneumatikkolben 100 zum Einstellen des Hydraulikflüssigkeitsdurchgangs aus einer Hydraulikkammer in die andere. In diesem Fall besteht der Pneumatikkolben 100 aus Abschnitten 102 und 104. Die beiden Abschnitte bewegen sich bei einem Dämpfungsstoß zusammen, wobei sie jedoch relativ um die Achse der Kolbenstange 36 drehbar sind. Dann wird der Abschnitt 104 durch jegliche geeignete Mittel gegenüber der Kolbenstange 36 gesichert, während der Abschnitt 102 relativ zum Abschnitt 104 drehbar ist, um den Durchfluß durch die Drosselöffnung 74' zu verändern und einzustellen.

Fig. 6 ist eine Schnittdarstellung, die die Drosselöffnung 74' zeigt. Die Drosselöffnung 74' wird um die Kolbenstangenlängsachse gedreht, um den Durchgang der Hydraulikflüssigkeit zwischen den der Dämpfung dienenden Kammern zu dosieren und damit zu verändern oder im Bedarsfalle auch teilweise zu blockieren.

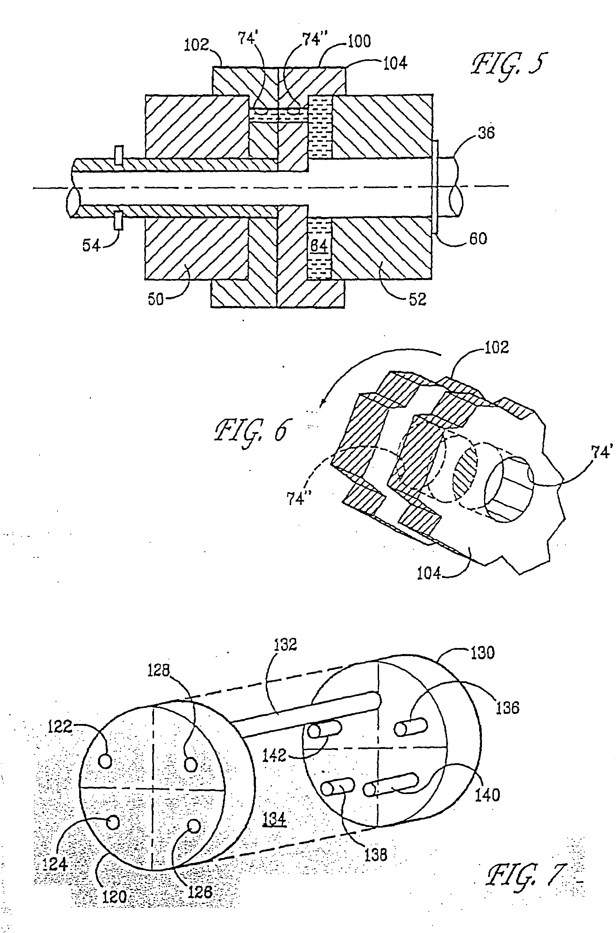

Fig. 7 zeigt eine noch andere Methode zur Regulierung des Durchgangs von Hydraulikflüssigkeit zwischen den beiden Hydraulikkammern in Form eines Pneumatikkolbens 120 mit einer Vielzahl von Dosierkanälen bzw. Drosselkanälen 122, 124, 126 und 128.

Der Dämpfungskolben 130 ist in Richtung des Pneumatikkolbens 120 entlang einer als Verdrehsicherung vorgesehenen Stange 132 beweglich. Die Hydraulikkammer 134 befindet sich zwischen dem Dämpfungskolben 130 und dem Pneumatikkolben 120. Bei Annäherung des Pneumatikkolbens 120 an den Dämpfungskolben 130 greift eine Vielzahl von auf dem Dämpfungskolben 130 befindlichen Stiften 136, 138, 140 und 142, die koaxial zu den Drosselöffnungen angeordnet sind, in die Drosselöffnungen ein, wodurch der Durchgang der Hydraulikflüssigkeit progressiv von der Hydraulikkammer 134 durch die Drosselöffnungen 122, 124, 126 und 128 eingeschränkt wird. Der lange Stift 140 gleitet in den Kanal 126, gefolgt von dem in den Kanal 126 hineingleitenden Stift 138, dem dann in den Kanal 128 gleitenden Stift 136 und schließlich dem in den Kanal 122 gleitenden kürzesten Stift 142. Zusätzliche Drosselstifte und Drosselöffnungen können benutzt werden.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 10: Pneumatikzylinder
- 12: Kopf, Zylinderkopf
- 14: Deckel, Zylinderdeckel
- 16: Zylinder, Pneumatikzylinder
- 18: Luftkammer, innenliegende; Pneumatikkammer
- 20: Pneumatikkolben, Kolben
- 22: Kanal, Kanalmittel, zweite
- 24: Ventilanordnung, Ventilmittel
- 26: Kanal, Kanalmittel, erste
- 28: Ventil, Ventilmittel
- 30: Kolbendichtung
- 32: Kolbendichtung
- 34: Verschleißring
- 36: Kolbenstange
- 40: Achse
- 41: Schulter
- 42: Axialverlängerung, Verlängerung, zylindrische
- 44: Axialverlängerung, Verlängerung, zylindrische
- 46: Ausnehmung
- 48: Ausnehmung
- 50: Dämpfungskolben, hydraulischer, hinterer
- 52: Dämpfungskolben, hydraulischer, vorderer
- 54: Haltering
- 53: Gegenmutter, Kontermutter, längliche
- 56: Innenwand, innere; Kolbenwandung
- 58: Dämpfungskammer, hydraulische; Kammer, hydraulisch
- 60: Haltering
- 62: Innenwand
- 64: Dämpfungskammer, hydraulische; Kammer, hydraulisch
- 66: Dichtungsring
- 68: Dichtungsring
- 70: Dichtungsring
- 72: Dichtungsring
- 74: Dosierkanal, Drosselkanal, hydraulischer
- 74': Drosselöffnung
- 74": Dosierkanal, Drosselkanal
- 76: Innenseite
- 80: Pfeil
- 100: Pneumatikkolben, Kolben
- 102: Abschnitt des Pneumatikkolbens 100
- 104: Abschnitt des Pneumatikkolbens
- 120: Pneumatikkolben, Kolben
- 122: Dosierkanal, Dämpfungskanal, Drosselkanal, Öffnung
- 124: Dosierkanal, Dämpfungskanal, Drosselkanal, Öffnung
- 126: Dosierkanal, Dämpfungskanal, Drosselkanal, Öffnung
- 128: Dosierkanal, Dämpfungskanal, Drosselkanal, Öffnung
- 130: Dämpfungskolben
- 132: Stange
- 134: Hydraulikkammer
- 136: Stift
- 138: Stift
- 140: Stift
- 142: Stift, Dämpfungsstift

## Patentansprüche

1. Ein Pneumatikzylinder (10) mit innenliegenden Flüssigkeitsdämpfungsmitteln, umfassend:
einen Pneumatikzylinder (16) mit an einem Ende angeordneten Kopf (12) und einem Deckel (14) an der gegenüberliegenden Seite, die eine innenliegende Pneumatikkammer bilden, wobei der Kopf (12) erste Kanalmittel (26) zum Ein- und Ausströmen von Luft in die Pneumatikkammer aufweist und der Deckel (14) zweite Kanalmittel (22) zum Ein- und Ausströmen von Luft in bzw. aus der Pneumatikkammer aufweist;
eine Kolbenstange (36), die sich in die Pneumatikkammer hineinerstreckt und die zunächst in Richtung auf den Deckel (14) und in die entgegengesetzte Richtung in Richtung auf den Kopf (12) axial bewegbar ist, und daß die Kolbenstange (36) aus dem Kopf (12) herausragt und hier eine Aufprall- oder Aufschlagkraft aufnehmen kann;
mit einem Pneumatikkolben (20), der auf der Kolbenstange (36) in der Pneumatikkammer angeordnet ist und sich mit der Kolbenstange (36) axial entsprechend dem Einleiten von Luft in die besagte Pneumatikkammer bewegen kann;
der Pneumatikkolben (20) weist eine erste dem Kopf (12) zugekehrte Dämpfungsvorrichtung (52, 64) und eine zweite, dem Deckel (14) zugekehrte Dämpfungsvorrichtung (50, 58) auf;
mit einem ersten relativ zur Kolbenstange (36) gleitbeweglichen Dämpfungskolben (52), der mit der ersten Dämpfungsvorrichtung (52, 64) zusammenwirkt, um diese erste Dämpfungsvorrichtung zu bilden;
einem zweiten Dämpfungskolben (50), der relativ zur Kolbenstange (36) gleitbeweglich angeordnet ist und der mit der zweiten Dämpfungsvorrichtung (50, 58) zusammenwirkt, um die zweite Dämpfungskammer (58) zu bilden;
der Pneumatikkolben (20) weist einen hydraulischen Drosselkanal (74) auf, der die erste hydraulische Dämpfungskammer (64) mit der zweiten hydraulischen Dämpfungskammer (58) verbindet;
ein Beaufschlagen mit hydraulischem Fluid der ersten Dämpfungskammer (64), der zweiten Dämpfungskammer (58) und des Drosselkanals (74) in der Weise, daß der Pneumatikkolben (20) in wenigstens einer der besagten Richtungen bewegbar ist, einer der besagten Dämpfungskolben (50, 52) verdrängt das hydraulische Fluid von der ersten Dämpfungskammer (64) durch den Drosselkanal (74) in Richtung auf die zweite Dämpfungskammer (58), wobei der Drosselkanal (74) so bemessen ist, daß er einen Widerstand dem durchströmenden hydraulischen Fluid entgegensetzt, wodurch die Bewegung des Pneumatikkolbens (20) am Ende des Hubes gedämpft ist.

2. Ein Pneumatikzylinder mit innenliegenden pneumatischen Dämpfungsmitteln, umfassend:
einen Pneumatikzylinder (16) mit an einem Ende angeordneten Kopf (12) und einem Deckel (14) an der gegenüberliegenden Seite, die eine innenliegende Pneumatikkammer (18) bilden, wobei der Kopf (12) erste Kanalmittel (26) zum Ein- und Ausströmen von Luft in die Pneumatikkammer (18) aufweist und der Deckel (14) zweite Kanalmittel (22) zum Ein- und Ausströmen von Luft in bzw. aus der Pneumatikkammer (18) aufweist;
eine in der Luftkammer (18) angeordnete und axial darin bewegliche Kolbenstange (36), die sich aus dem Kopf (12) herauserstreckt und hier eine Aufprall- oder Aufschlagkraft aufnehmen kann;
einen Pneumatikkolben (20), der auf der Kolbenstange (36) in der Luftkammer (18) angeordnet ist und der sich je nach in die Luftkammer (18) einströmender Luft zusammen mit der Kolbenstange (36) bewegt;
der Pneumatikkolben (20) weist eine Dämpfungsvorrichtung (52, 64) auf, die wenigstens einem Endabschnitt des Pneumatikzylinders (16) zugeordnet ist;
einem auf der Kolbenstange (36) gleitbeweglich angeordneten Dämpfungskolben (50), der mit der Dämpfungsvorrichtung (52) zur Bildung einer Dämpfungskammer (58) zusammenwirkt;
der Pneumatikkolben (20) weist eine innenliegende hydraulische Drosselöffnung (74') auf, die mit der Dämpfungskammer (58) verbunden ist;
eine Beaufschlagung mit hydraulischem Fluid füllt die Dämpfungskammer (58), die Drosselöffnung (74') in der Weise, daß der Pneumatikkolben (20) sich einem der Enden des Pneumatikzylinders (16) nähert, wobei das hydraulische Fluid von der Dämpfungskammer (58) durch die Drosselöffnung (74') passiert, wobei die Drosselöffnung (74') größenmäßig so bemessen ist, daß sie einen Widerstand dem Durchströmen des hydraulischen Fluids entgegensetzt und hierbei die Bewegung des Pneumatikkolbens (20) am Ende des Hubes dämpft.

3. Ein Pneumatikzylinder entsprechend Anspruch 2, wobei die dem Pneumatikkolben (20) zugeordnete Drosselöffnung (74') eine erste Öffnung (122) und eine zweite Öffnung (124) aufweist, wobei der Dämpfungskolben (130) einen ersten Stift (142) einer ersten Länge aufweist, die koaxial mit der ersten Öffnung (122) angeordnet ist und einen zweiten Stift (138) von zweiter geringerer Länge aufweist und dieser zweite Stift (138) mit der zweiten Öffnung (124) koaxial angeordnet ist, wobei der erste Stift (142) in der ersten Öffnung (122) aufnehmbar ist, um den Durchflußquerschnitt durch die Drosselöffnung einzuschränken und der zweite Stift (138) in der zweiten Öffnung (124) aufnehmbar ist, um eine weitere Durchflußeinschränkung durch die Drosselöffnung (124) an einer anderen Stellung des Pneumatikkolbens (20) während des Hubes zu bewirken.

4. Pneumatikzylinder mit innenliegenden Dämpfungsmitteln, umfassend:
einen Pneumatikzylinder (16) mit an einem Ende angeordneten Kopf (12) und einem Deckel (14) an der gegenüberliegenden Seite, die eine innenliegende Pneumatikkammer (18) bilden, wobei der Kopf (12) erste Kanalmittel (26) zum Ein- und Ausströmen von Luft in die Pneumatikkammer (18) aufweist und der Deckel (14) zweite Kanalmittel (22) zum Ein- und Ausströmen von Luft in bzw. aus der Pneumatikkammer (18) aufweist;
mit einer Kolbenstange (36), die axial in der betreffenden Luftkammer (18) in axialer Richtung bewegbar ist, wobei sich die Kolbenstange (36) aus dem Kopf (12) zwecks Aufnahme einer Aufprall- oder Aufschlagkraft erstreckt;
einem auf der Kolbenstange (36) in der Luftkammer (18) angeordneten Pneumatikkolben (20), derart, daß sich der Pneumatikkolben (20) bei einem Hub entsprechend der in die Pneumatikkammer (18) eingeleiteten Luft axial bewegt;
einer hydraulischen Dämpfungsvorrichtung (52, 64), die von dem Pneumatikkolben (20) in der besagten Luftkammer (18) getragen bzw. gebildet ist;
einem Dämpfungskolben (50), der in Bezug auf die Kolbenstange (36) gleitbeweglich angeordnet ist und mit der hydraulischen Dämpfungsvorrichtung (52, 64) zusammenwirkt, um eine Dämpfungskammer (58) zu bilden;
wobei der Pneumatikkolben (20) einen hydraulischen Dosierkanal (74) aufweist, der mit der Dämpfungskammer (58) verbunden ist;
wobei der Pneumatikkolben (20), wenn er sich in einem axialen Hub befindet, über den Dämpfungskolben (50) hydraulisches Fluid aus der bei Beaufschlagung mit hydraulischem Fluid angefüllten Dämpfungskammer (58) durch den Drosselkanal (74) preßt, wobei die Drosselöffnung so bemessen ist, daß sie ein Hindurchströmen des hydraulischen Fluids einem Widerstand entgegensetzt, wodurch die Bewegung des Pneumatikkolbens (20) am Ende des Hubes gedämpft ist.

5. Pneumatikzylinder mit innenliegenden Dämpfungsmitteln, umfassend:
einen Pneumatikzylinder (16) mit innenliegenden hydraulischen Dämpfungsmitteln (50, 52, 58, 64), umfassend
einen Pneumatikzylinder (16) mit an einem Ende angeordneten Kopf (12) und einem Deckel (14) an der gegenüberliegenden Seite, die eine innenliegende Pneumatikkammer (18) bilden, wobei der Kopf (12) erste Kanalmittel (26) zum Ein- und Ausströmen von Luft in die Pneumatikkammer (18) aufweist und der Deckel (14) zweite Kanalmittel (22) zum Ein- und Ausströmen von Luft in bzw. aus der Pneumatikkammer aufweist;
eine in der Pneumatikkammer (18) angeordnete Kolbenstange (36), die axial in einer ersten Richtung gegen den Deckel (14) und in der entgegengesetzten Richtung gegen den Kopf (12) axial beweglich ist, wobei die Kolbenstange (36) sich aus dem Kopf (12) herauserstreckt, um eine Aufprall- oder Aufschlagkraft aufzunehmen;
einem Pneumatikkolben (20), der auf der Kolbenstange (36) in der Pneumatikkammer (18) derart angeordnet ist, daß er axial zusammen mit der Kolbenstange (36) in Abhängigkeit von der in die Pneumatikkammer (18) einströmenden Luft axial verschieblich ist;
mit einem hydraulischen Kolbenteil (z. B. 50), einem hydraulischen Zylinderteil, der mit dem hydraulischen Kolbenteil zwecks Bildung einer hydraulischen Kammer (z. B. 58) zusammenwirkt;
Beaufschlagung mit hydraulischem Fluid der betreffenden Hydraulikkammer (z. B. 58),
einem Drosselkanal (74), der fluidleitend an die hydraulische Kammer (z. B. 58) angeschlossen ist; umfassend:
eines der besagten Teile formt einen Teil des besagten Pneumatikkolbens (20), derart, daß es damit beweglich ist, wobei der Pneumatikkolben (20) sich innerhalb der Pneumatikkammer (18) bewegt und eines der besagten Teile relativ zu dem anderen besagten Teil beweglich ist, um hydraulisches Fluid durch die besagte Drosselöffnung (74') zu bewegen, und zwar von der einen Hydraulikkammer (58), um hierdurch die Bewegung des Pneumatikkolbens (20) zu verzögern, wenn er sich dem Ende seines pneumatischen Kolbenhubes nähert.

6. Pneumatikzylinder nach Anspruch 5, bei welchem eines der Teile eine Vielzahl von Drosselkanälen oder Drosselöffnungen aufweist, umfassend einen ersten Stift (142) und einen zweiten Stift (138), die jeweils koaxial zu einer entsprechenden Vielzahl von zugehörigen Drosselöffnungen oder Drosselkanälen (122, 124) angeordnet und von diesen jeweils aufnehmbar sind, wobei der erste Stift (z. B. 142) in einen der besagten Kanäle oder in eine der besagten Öffnungen (z. B. 122) eintritt und sie verschließt und dadurch den Durchgang von hydraulischem Medium blockiert, wobei bei weiterer Bewegung des Pneumatikkolbens (18) der zweite Stift (z. B. 138) in die zweite Drosselöffnung oder in den zweiten Drosselkanal eintritt, um hierdurch die Bewegung des Pneumatikkolbens (20) weiter zu verzögern.

7. Pneumatikzylinder nach Anspruch 5, bei welchem einer der besagten Teile (102, 104) eine erste Drosselöffnung (74") und das zweite der besagten Teile eine zweite Drosselöffnung (74") aufweist, die zur ersten Drosselöffnung (74") ausgerichtet ist, wobei eines der besagten Teile (102, 104) relativ zu dem zweiten Teil beweglich angeordnet ist, und zwar von einer ersten Position, in welcher ein erster Teil der zweiten Drosselöffnung blockiert ist, um teilweise den Hydraulikstrom zu drosseln, und einer weiteren, z. B. zweiten Position, in welcher ein größerer Teil der zweiten Drosselöffnung blockiert ist, um dadurch die Menge des hydraulischen Flusses zu verändern.

8. Pneumatikzylinder nach Anspruch 7, bei welchem das erste Teil (z. B. 102) um eine Achse drehbar angeordnet ist, um die Flußrichtung des hydraulischen Fluids durch die zweite Drosselöffnung (74") zu definieren.

9. Verfahren zum hydraulischen Dämpfen des Hubes eines Pneumatikkolbens (20), der axial in einer Pneumatikkammer (18) angeordnet ist, mit folgenden Verfahrensschritten:
Einbringen einer Menge eines hydraulischen Fluids in die Pneumatikkammer (18);
Durchleiten des hydraulischen Fluids durch einen Drosselkanal (74, 74") oder eine Drosselöffnung (74'), wenn sich der Pneumatikkolben (20) in axialer Richtung relativ zur Pneumatikkammer (18) bewegt, um dadurch die Bewegung des Pneumatikkolbens (20) zu verzögern, und zwar entsprechend dem Widerstand der Drosselöffnung oder des Drosselkanals (74) beim Passieren des hydraulischen Fluids.
